# EUROPÄISCHE PATENTANMELDUNG

(11) **EP 0 719 804 A2**
(43) Veröffentlichungstag der Anmeldung: **03.07.1996**
(21) Anmeldenummer: 95120265.4
(22) Anmeldetag: 21.12.1995
(51) Int. Cl.: C08F 265/04, C08F 271/02, G03G 9/13

(54) **Pfropf-Mischpolymerisate und diese enthaltende farblose, transparente elektrophotographische Toner**

(30) Priorität: 29.12.1994 DE 4447107
(71) Anmelder: HOECHST AKTIENGESELLSCHAFT, D-65926 Frankfurt am Main (DE)
(72) Erfinder: Faust, Raimund Josef, Dr., D-65203 Wiesbaden (DE); Allen, Danuta Eva, D-65207 Wiesbaden (DE)

(57) **Zusammenfassung**

Es wird ein Pfropf-Mischpolymerisat aus wiederkehrenden Einheiten aus

| | |
|---|---|
| (C₆-C₁₈)Alkyl(meth)acrylat | A |
| Vinylpyridin | B |
| Glycidyl(meth)acrylat | C |

und mit (Meth)acrylsäure veresterten Glycidyl(meth)acrylateinheiten (D) beschrieben, auf die polymere Seitenketten aus Einheiten von Vinylpyridin, (C₁-C₃)Alkylacrylat und ggf. (C₁-C₃)Alkylmethacrylat aufgepfropft sind. Das Polymere ist als Bindemittel für farblose, positiv aufladbare Flüssigtoner, insbesondere in Kombination mit Copolymeren aus (C₆-C₁₈)Alkyl(meth)acrylat und Hydroxyalkyl(meth)acrylat als Ladungssteuermittel geeignet. Die Toner geben nach Fixieren des elektrophotographisch erzeugten Tonerbilds farblose Resistmasken oder Druckschablonen mit hoher Resistenz gegen Ätz- und Lösemittel.

## Beschreibung

Die Erfindung betrifft Pfropf-Mischpolymerisate sowie positiv gesteuerte elektrophotographische Flüssigtoner, die diese Mischpolymerisate als Bindemittel enthalten.

Elektrophotographische Flüssigtoner sind üblicherweise in einer Flüssigkeit mit hohem elektrischem Widerstand dispergierte Partikel, deren Hauptbestandteile harzartige polymere Bindemittel, Ladungssteuerstoffe und Farbpigmente oder Farbstoffe sind. Die Farbstoffe oder bevorzugt Farbpigmente sind im allgemeinen erforderlich, da sie zum Sichtbarmachen von latenten Bildern, z. B. bei üblichen elektrophotographischen Kopien, dienen. Diese Farbstoffe oder Pigmente haben häufig zugleich die Funktion von Ladungssteuerstoffen und sind auch aus diesem Grund notwendige Bestandteile des Toners. Für bestimmte Anwendungen elektrophotographischer Bebilderungsverfahren, z. B. für die Herstellung von Druckplatten oder Resistmasken, sind keine Farbtoner erforderlich. Das Tonerbild dient hier lediglich zur Erzeugung von Druckfarbe annehmenden Bildelementen oder zur bildmäßigen Abdeckung einer Oberfläche als Schutz gegen Ätzlösungen oder Galvanisierbäder. Solche farblosen oder weißen Toner sind bereits bekannt.

In der JP-A Hei 1/142 688 werden weiße oder transparente Toner beschrieben, die ein polymeres Bindemittel, einen Ladungssteuerstoff, ein Trennmittel und ggf. ein weißes Pigment enthalten. Als Bindemittel werden z. B. Polystyrol, Styrol/Butadien-, Styrol/Acrylsäure-Copolymere, Polyethylen, Ethylencopolymere, Phenolharze, Epoxyharze, Allylphthalatpolymere, Polyamide, Polyester und Maleinatharze eingesetzt. Als positive Ladungssteuerstoffe werden basische Stickstoffatome enthaltende organische Verbindungen oder mit solchen Verbindungen oberflächenbehandelte Füllstoffe, als negative Ladungssteuerstoffe Carboxylgruppen enthaltende Verbindungen genannt. Die mit diesen Tonern erhaltenen Tonerbilder sind nicht ausreichend resistent gegen aggressive Chemikalien und nicht frei von Fehlstellen (pin-holes) und damit nur schlecht für die Verwendung als Resistmaterialien geeignet.

Farblose Toner werden auch in der JP-A 2/140 757 beschrieben. Sie werden dort als Zusätze zu Farbtonern eingesetzt. Sie enthalten höhere Anteile an Wachsen und sind deshalb zur Erzeugung von Tonerbildern für Flachdruckformen oder Resistmaterialien nicht geeignet.

In der EP-A 66 955 und der DE-A 22 48 191 werden farblose Toner beschrieben, die eine Verbindung enthalten, die zu einer farbigen Verbindung zu reagieren vermag. Auch diese Toner haben keine ausreichende Resistenz gegenüber aggressiven Substanzen wie Ätzmitteln.

Aufgabe der Erfindung war es, als Bindemittel für positiv aufladbare elektrophotographische Toner geeignete Polymere vorzuschlagen, die sich in Kombination mit geeigneten hochmolekularen Ladungssteuerstoffen in langkettigen aliphatischen Kohlenwasserstoffen zu einer stabilen Tonerdispersion verarbeiten lassen, aus der auf elektrophotographischem Wege farblose, transparente Tonerbilder abscheidbar sind, die zu einer fehlerfreien Schicht mit guter Resistenz gegen aggressive Chemikalien und gegen mechanischen Abrieb beim Flachdruck fixiert werden können und die beim Fixieren bzw. Einbrennen des Tonerbilds keine störende Verfärbung erleiden.

Erfindungsgemäß wird ein Pfropf-Mischpolymerisat aus wiederkehrenden Einheiten A, B, C und D 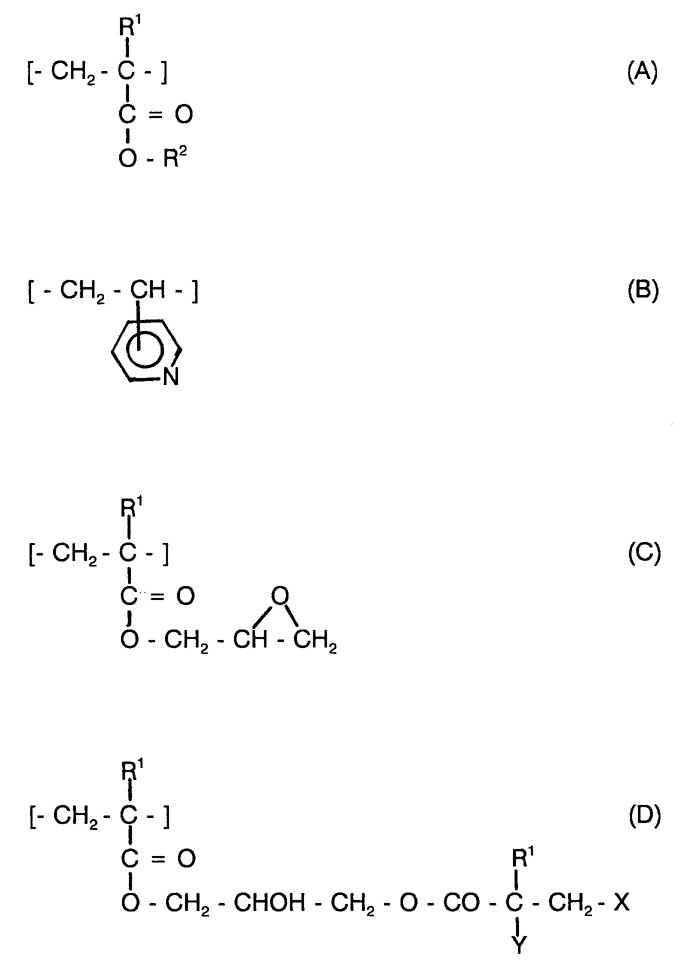
vorgeschlagen, wobei X und Y Initiatorreste oder aufgepfropfte polymere Reste aus Einheiten B, E und F 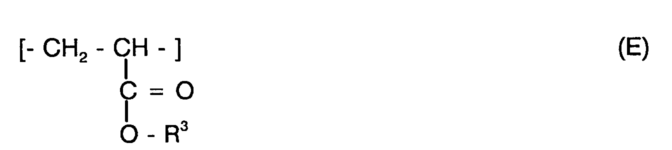 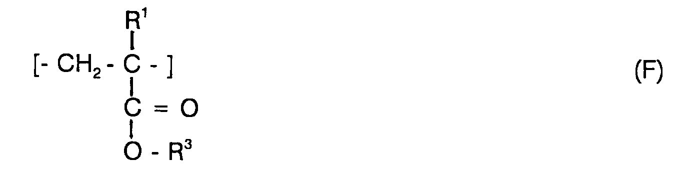
bedeuten, wobei
- R¹: ein Wasserstoffatom oder eine Methylgruppe,
- R²: eine Alkylgruppe mit 6 bis 18 Kohlenstoffatomen und
- R³: eine Alkylgruppe mit 1 bis 3 Kohlenstoffatomen und
nicht mehr als einer der Reste X und Y ein Initiatorrest ist.

Erfindungsgemäß wird ferner ein farbloser und transparenter, positiv arbeitender Flüssigtoner vorgeschlagen, der aus einer stabilen Dispersion eines hochpolymeren Bindemittels und eines hochpolymeren Steuermittels in einem aliphatischen Kohlenwasserstoff besteht, wobei der Toner dadurch gekennzeichnet ist, daß das Bindemittel ein Pfropf-Mischpolymerisat der vorstehend angegebenen Zusammensetzung und das Steuermittel ein Polymeres mit Einheiten A und G ist, worin A die oben angegebene Bedeutung hat und G der Formel 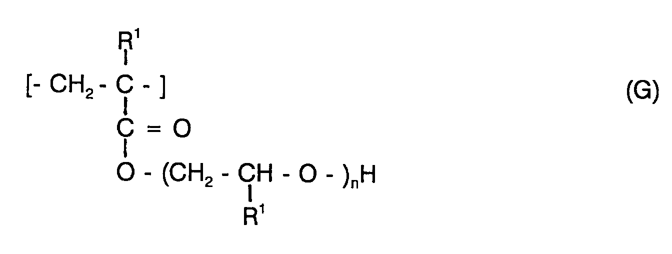
entspricht, worin R¹ die in Anspruch 1 angegebene Bedeutung hat, beide R¹ gleich oder verschieden sein können und n eine Zahl von 1 bis 3 ist.

Erfindungsgemäß wird schließlich auch die Verwendung des vorstehend definierten Flüssigtoners zur Herstellung von Flachdruckplatten oder von Resistmaterialien, wie Ätz- oder Galvanoresists, vorgeschlagen.

Die erfindungsgemäßen Toner sind zum Unterschied von üblichen elektrophotographischen Tonern farblos und transparent, und sie enthalten auch keine für eine nachfolgende Verarbeitung als Farbbildner geeigneten und wirksamen Bestandteile. Sie dienen dazu, farblose Tonerbilder zu erzeugen, die als bildmäßige Abdeckungen oder Masken von zu verändernden Oberflächen, z. B. als Ätzreservagen, oder aber als farbführende Bildelemente einer Druckplatte, insbesondere einer Flachdruckplatte, geeignet sind. Bei den bekannten Farbtonern hat der Gehalt an Pigment oder Farbstoff nicht nur die Wirkung, dem Tonerbild eine gewünschte Färbung zu vermitteln; diese Bestandteile beeinflussen und fördern auch in wesentlichem Umfang die Aufladbarkeit der Tonerpartikel. Bei Weglassen der Farbpigmente werden deshalb die gewünschten elektrophotographischen Eigenschaften stark beeinträchtigt. Wie nun gefunden wurde, kann durch Einsatz der neuen Pfropf-Mischpolymerisate als Bindemittel, bevorzugt in Kombination mit den vorstehend genannten Mischpolymerisaten als Ladungssteuerstoffe, ein elektrophotographischer Flüssigtoner mit sehr guten elektrophotographischen Eigenschaften hergestellt werden, der zu Tonerbildern mit hervorragender Resistenz gegenüber Lösemitteln und Chemikalien, z. B. gegenüber Alkohole enthaltenden Feuchtwässern beim Flachdruck oder gegenüber Ätzmitteln, verarbeitet werden kann. Die erfindungsgemäßen Toner haben ferner die Eigenschaft, daß sie sich beim Fixieren durch Aufschmelzen nicht in störender Weise verfärben.

Die erfindungsgemäßen Pfropf-Mischpolymerisate bestehen aus einer Anzahl unterschiedlicher Einheiten. Ihre Grundkette enthält Einheiten A aus Alkyl(meth)acrylaten mit 6 bis 18 Kohlenstoffatomen in der Alkylgruppe. Diese Einheiten begünstigen die Ausbildung von stabilen Dispersionen. Die Grundkette enthält ferner Einheiten B, die von Vinylpyridin, insbesondere 4-Vinyl-pyridin, abgeleitet sind und die positive Aufladbarkeit begünstigen. Sie enthält weiterhin Einheiten C von (Meth)acrylsäureestern mit funktionellen Gruppen, über die eine Verknüpfung mit den aufgepfropften Seitenketten erfolgt. Diese Einheiten sind vorzugsweise Glycidyl(meth)acrylateinheiten. Sie sind in der Regel auch noch in dem fertigen Pfropfpolymeren enthalten, da sie bei der Umsetzung mit reaktiven Verbindungen, insbesondere (Meth)acrylsäure, an die sich später die aufgepfropften Seitenketten anlagern, nicht vollständig umgesetzt werden. Schließlich enthält die Grundkette noch solche Einheiten, die aus den Glycidylmethacrylateinheiten durch Umsetzen mit funktionellen Verbindungen, insbesondere ungesättigten Carbonsäuren, und deren weitere Polymerisation mit ungesättigten Verbindungen zu polymeren Seitenketten entstanden sind. Die Seitenketten enthalten wiederum Einheiten des Typs B und Einheiten F von kurzkettigen Alkyl(meth)-acrylaten, wobei mindestens ein Teil der Alkyl(meth)acrylateinheiten aus Alkylacrylateinheiten E besteht.

Die Mengenanteile der Einheiten A, B, C und D in der Grundkette liegen im allgemeinen im Bereich von 50 - 100, bevorzugt 60 - 80 Gewichtsteilen A, 0,5 - 3,0, vorzugsweise 1 - 2 Gewichtsteilen B, 0,5 - 4, vorzugsweise 1,5 - 3 Gewichtsteilen C und 250 - 1000, bevorzugt 350 - 600 Gewichtsteilen D.

Die erfindungsgemäßen Pfropf-Mischpolymerisate werden mit Ladungssteuerstoffen bzw. -steuermitteln gemischt, die Copolymere aus Einheiten A und G sind. Das Mengenverhältnis der Einheiten A und G liegt bevorzugt im Bereich von 67 bis 98, insbesondere 80 bis 94 Gew.-% A zu 2 bis 33, insbesondere 6 bis 20 Gew.-% G.

Die Herstellung der erfindungsgemäßen Pfropf-Mischpolymerisate erfolgt zweckmäßig in mehreren Stufen. Zunächst wird ein Polymeres durch Lösungs- bzw. Emulsionspolymerisation von Monomeren hergestellt, die die Einheiten A, B und C bilden. Die Polymerisation wird zweckmäßig unter radikalischer Initiierung in einem Lösemittel durchgeführt, das bereits als Dispergiermittel für die spätere Toneranwendung geeignet ist. Der Mengenanteil der Monomeren liegt dabei im Bereich von 50 - 100, vorzugsweise 60 - 80 Gewichtsteilen A, 0,5 - 3, vorzugsweise 1 - 2 Gewichtsteilen B und 1 - 6, vorzugsweise 2 - 4 Gewichtsteilen C. Dieses Terpolymere wird in einer zweiten Stufe mit Acryl- oder Methacrylsäure in Gegenwart eines tertiären Amins umgesetzt, wobei die Glycidylgruppe der Einheit C mit der Carboxylgruppe der (Meth)acrylsäure unter Esterbildung reagiert. Die Mengenanteile bei dieser Stufe werden so gewählt, daß die Carboxylgruppen vollständig umgesetzt und nur ein Teil der Epoxidgruppen verestert werden. Im allgemeinen werden etwa 0,1 bis 0,9 vorzugsweise 0,2 bis 0,75 Äquivalente Säure je Äquivalent Epoxidgruppen eingesetzt.

Schließlich werden in einer Pfropfpolymerisationsreaktion weitere Monomere der Typen B, E und F in Gegenwart des Polymeren mit seitenständigen (Meth)acryloyloxygruppen polymerisiert. Dabei entsteht ein Pfropf-Mischpolymerisat mit aufgepfropften Seitenketten aus diesen Einheiten. Das Mengenverhältnis der Einheiten B, E und F in der Seitenkette ist im allgemeinen so bemessen, daß auf eine Einheit aus (Meth)acrylsäure im Mittel etwa 1 - 20 Einheiten B, 150 - 300 Einheiten E und 70 - 150 Einheiten F kommen. In der Regel entstehen neben den aufgepfropften Ketten aus B, E und F stets in gewisser Menge auch unabhängige Mischpolymerisate aus B, E und F, die nicht an das Grundpolymere aus A, B , C und D gebunden sind. Ihre Gegenwart stört die Brauchbarkeit des Polymerisationsprodukts nicht, solange noch Pfropfpolymerisate in signifikantem Umfang gebildet werden. Dies ist gewährleistet, wenn die Herstellung in der beschriebenen Weise erfolgt, d. h. wenn bei der letzten Stufe der Polymerisation Polymere mit seitenständigen (Meth)acryloylgruppen als Ausgangsstellen für eine Polymerisation angeboten werden.

Die fertigen Pfropf-Mischpolymerisate werden zur Herstellung des erfindinngsgemäßen Toners mit polymeren Ladungssteuerstoffen der oben angegebenen Zusammensetzung gemischt. Das Mischen erfolgt am zweckmäßigsten durch Vermischen der bei der Polymerisation in einem Kohlenwasserstoff als Löse- oder Dispergiermittel erhaltenen stabilen Dispersionen im gewünschten Mengenverhältnis und ggf. durch Verdünnen mit weiterem Lösemittel.

Das Ladungssteuermittel wird ebenfalls durch Polymerisation aus den Monomeren hergestellt, die die Einheiten A und G bilden. Die Polymerisation erfolgt vorteilhaft in Lösung bzw. Emulsion in einem inerten Lösemittel, vorzugsweise einem aliphatischen oder aromatischen Kohlenwasserstoff. Sie wird im allgemeinen in gleicher Weise durchgeführt wie bei der Herstellung des Bindemittels.

In den Einheiten A ist R² ein Alkylrest mit 6 bis 18, bevorzugt 8 bis 15 Kohlenstoffatomen; R³ ist bevorzugt eine Methylgruppe. In den Einheiten G ist R¹ bevorzugt ein Wasserstoffatom und n = 1. Die Einheiten A sind in dem Polymeren im allgemeinen in einem Mengenanteil von 67 - 98, vorzugsweise 80 - 94 Gew.-%, die Einheiten G in einem Mengenanteil von 2 - 33, bevorzugt 6 - 20 Gew.-% enthalten.

Der erfindungsgemäße Flüssigtoner wird, wie oben erwähnt, durch Vermischen von Binde- und Steuermittel, vorteilhaft in Form der bei der Polymerisation anfallenden stabilen Dispersionen in Kohlenwasserstoffen hergestellt. Als Dispergiermittel werden bevorzugt aliphatische Kohlenwasserstoffe mit etwa 8 bis 15 Kohlenstoffatomen eingesetzt. Die Mengenanteile von Bindemittel und Steuerstoff liegen im allgemeinen im Bereich von
80 - 99, bevorzugt 85 - 96 Gew.-% Bindemittel und
1 - 20, bevorzugt 4 - 15 Gew.-% Steuermittel,
bezogen auf den Gesamtfeststoffgehalt. Die gebrauchsfertigen Toner weisen im allgemeinen einen Feststoffgehalt von etwa 0,5 - 10, vorzugsweise 0,8 - 5 Gew.-% auf.

Die erfindungsgemäßen Toner zeichnen sich dadurch aus, daß sie ohne Zusatz von Farbpigmenten oder Farbstoffen eine positive Aufladbarkeit in der erforderlichen Höhe aufweisen. Sie benötigen auch keine niedermolekularen Ladungssteuermittel und weisen daher nach dem Fixieren zum Tonerbild eine besonders gute Resistenz gegenüber Ätzmitteln und organischen Lösemitteln auf, die sie hervorragend zum Einsatz als Resistmasken und für Flachdruckplatten geeignet machen. Wegen ihrer auch nach dem Fixieren erhaltenen Farblosigkeit und Transparenz sind sie auch zur Herstellung farbiger Bilder durch bildmäßiges Abdecken einer farbigen Schicht und Entfernen der freiliegenden Schichtbereiche durch Auswaschen oder Ätzen geeignet. Diese Vorteile werden durch die Kombination der oben bezeichneten speziellen polymeren Bindemittel und Ladungssteuermittel erreicht.

Die folgenden Beispiele erläutern bevorzugte Ausführungsformen der Erfindung.

### Beispiel 1

### Synthese eines Pfropfpolymeren als Bindemittel

### Reaktionsstufe 1

In einem Dreihalskolben mit Rückflußkühler, Gaseinleitungsrohr und Rührer wurden 72 g 2-Ethylhexylmethacrylat, 1,2 g 4-Vinylpyridin, 2,7 g Glycidylmethacrylat, 1,0 g Azoisobutyronitril und 125 g Isopar H (Gemisch von verzweigten C₁₀- bis C₁₂-Paraffinkohlenwasserstoffen, Siedebereich 179 - 192 °C; Flammpunkt 58 °C) vorgelegt und unter Reinststickstoff zur Polymerisation gebracht; hierzu wurde das Gemisch mit einem Heizbad auf 90 °C erwärmt und unter Rühren 6 Stunden bei 90 °C polymerisiert. Nach Abkühlen wurde belüftet, mit 100 ml Isopar H versetzt und sodann ein Teil (100 ml) des Lösemittels unter Vakuum bei 20 mbar abdestilliert, um Restmonomere abzutrennen. Die so erhaltene Polymerlösung war von farblosem, transparentem Aussehen und leicht viskos.

### Reaktionsstufe 2

In einem Dreihalskolben mit Rückflußkühler, Gaseinleitungsrohr und Rührer wurde das aus Reaktionsstufe 1 erhaltene Zwischenprodukt mit Methacrylsäure zur Reaktion gebracht. Hierzu wurden zunächst 200 g des Zwischenprodukts vorgelegt, auf 90 °C erwärmt, mit 0,16 g Dimethylaminododecan und nach 30 Minuten mit 0,42 g Methacrylsäure versetzt. Nach einer Gesamtreaktionszeit von 14 Stunden bei 90 °C wurde ein farbloses, transparentes Reaktionsprodukt erhalten.

| | |
|---|---|
| Viskosität: | 89 bis 105 mPa·s |
| Feststoff: | 40 Gew.-% |

### Reaktionsstufe 3

In einem Dreihalskolben mit Rückflußkühler, Gaseinleitungsrohr und Rührer wurden unter Reinststickstoff 29,0 g des Produkts aus Reaktionsstufe 2, 54 g Methylacrylat, 27 g Methylmethacrylat, 3,0 g 4-Vinylpyridin, 0,4 g tert.-Dodecylmercaptan und 0,9 g Azoisobutyronitril vorgelegt und auf 90 °C Innentemperatur erwärmt. Es wurde bei 90 °C 7 Stunden polymerisiert; sodann wurden nochmals 0,8 g Azoisobutyronitril zugegeben und es wurde erneut 5 Stunden bei 90 °C polymerisiert. Nach Abkühlen wurde belüftet, mit 100 ml Isopar H versetzt und durch Abdestillieren im Vakuum ein Teil des Lösemittels (100 ml) entfernt, um Restmonomere abzutrennen. Es wurde ein milchig-weißes Reaktionsprodukt erhalten. (Lösung A)

| | |
|---|---|
| Viskosität: | 3,2 bis 3,6 mPa·s bei 30 Gew.-% Feststoff |
| Leitfähigkeit: | 7 bis 10·10⁻¹² Siemens/cm |

### Synthese eines polymeren Steuermittels

In einem Dreihalskolben mit Rückflußkühler, Tropftrichter mit Gaseinleitungsrohr und Rührer wurden unter Reinststickstoff
- 35 g: Laurylmethacrylat,
- 4,5 g: 2-Hydroxyethylmethacrylat,
- 0,09 g: tert.-Dodecylmercaptan und
- 0,11 g: Azosiobutyronitril,
gelöst in 120 g Toluol, vorgelegt und zunächst auf 70 °C erwärmt. Nach 1 Stunde wurde auf 80 °C erwärmt, und nach erneut 2 Stunden wurde die Temperatur auf 90 °C erhöht. Nun wurden innerhalb von 2 Stunden
- 107 g: Laurylmethacrylat,
- 13,7 g: 2-Hydroxyethylmethacrylat,
- 0,26 g: tert.-Dodecylmercaptan und
- 0,33 g: Azoisobutyronitril,
gelöst in 120 g Toluol, zugegeben und nach Beendigung der Zugabe wurde nochmals 4 Stunden bei 90 °C polymerisiert. Anschließend wurde abgekühlt und belüftet. Das Toluol wurde im Vakuum bei 20 mbar abdestilliert. Sodann wurden 240 ml Isopar G [Paraffinkohlenwasserstoffgemisch (Siedebereich 158 - 176 °C;
Flammpunkt 41 °C)] zugesetzt.

| | |
|---|---|
| Feststoffgehalt: | 40 Gew.-% (Lösung B) |

### Herstellung eines farblosen Flüssigtoners

### Herstellung des Flüssigkonzentrats

Das Tonerkonzentrat wurde durch Mischen von
- 66,9 g: Lösung A,
- 3,25 g: Lösung B und
- 235 g: Isopar G
hergestellt. Hierzu wurden zunächst Lösung A und Lösung B bei 60 °C 1 Stunde gerührt, nach Abkühlen mit Isopar G versetzt und erneut 5 Minuten gerührt.

### Herstellung des Toners durch Verdünnung

1 Volumenteil Flüssigkonzentrat wurde mit 4 Volumenteilen Isopar G versetzt und 5 Minuten bei Raumtemperatur gerührt.

| | |
|---|---|
| Leitfähigkeit: | 77,5·10⁻¹² Siemens/cm |
| Abscheidung an der Kathode (bei 1000 V; 1 s): | 270 mg / 100 ml Flüssigtoner |

## Patentansprüche

1. Pfropf-Mischpolymerisat aus wiederkehrenden Einheiten A, B, C und D 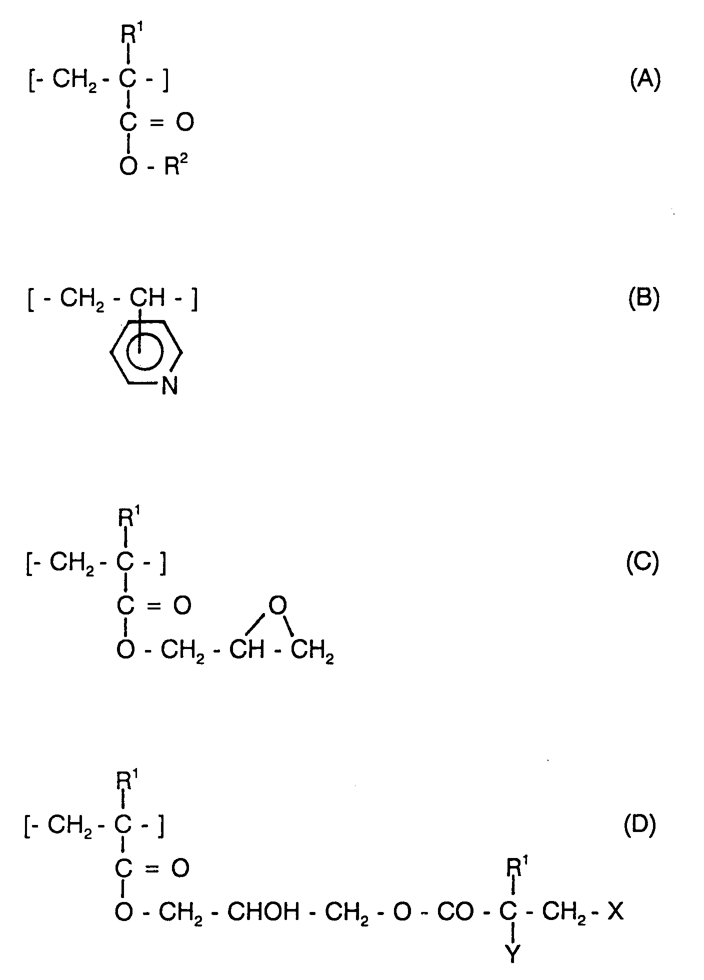 worin X und Y Initiatorreste oder aufgepfropfte polymere Reste aus Einheiten B, E und F 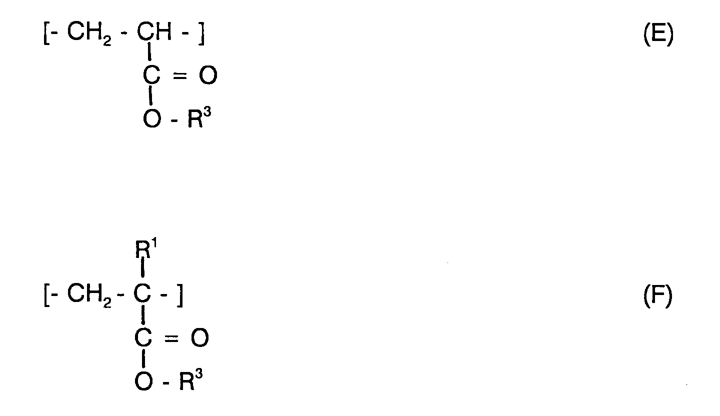 bedeuten, wobei
R¹ ein Wasserstoffatom oder eine Methylgruppe,
R² eine Alkylgruppe mit 6 bis 18 Kohlenstoffatomen,
R³ eine Alkylgruppe mit 1 bis 3 Kohlenstoffatomen und
nicht mehr als einer der Reste X und Y ein Initiatorrest ist.

2. Pfropf-Mischpolymerisat nach Anspruch 1, dadurch gekennzeichnet, daß die Mengenanteile der Einheiten wie folgt bemessen sind:
| | |
|---|---|
| A | 50 - 100 Gewichtsteile |
| B (in der Hauptkette) | 0,5 - 3 Gewichtsteile |
| C | 0,5 - 4 Gewichtsteile |
| D | 250 - 1000 Gewichtsteile |

3. Farbloser und transparenter, positiv aufladbarer Flüssigtoner, bestehend aus einer stabilen Dispersion eines hochpolymeren Bindemittels und eines hochpolymeren Steuermittels in einem aliphatischen Kohlenwasserstoff, dadurch gekennzeichnet, daß das Bindemittel ein Pfropf-Mischpolymerisat gemäß einem der Ansprüche 1 und 2 und das Steuermittel ein Polymeres mit Einheiten A und G ist, worin A die in Anspruch 1 angegebene Bedeutung hat und G der Formel 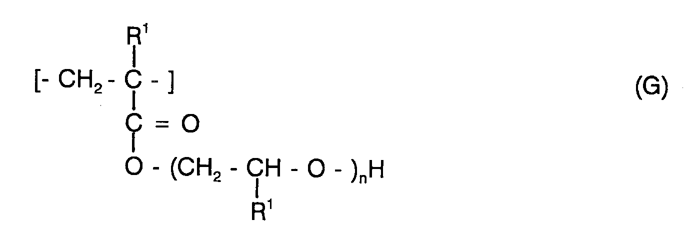 entspricht, worin R¹ die in Anspruch 1 angegebene Bedeutung hat, beide R¹ gleich oder verschieden sein können und n eine Zahl von 1 bis 3 ist.

4. Flüssigtoner nach Anspruch 3, dadurch gekennzeichnet, daß in dem Steuermittel die Mengenanteile der Einheiten
| | |
|---|---|
| A | 67 bis 98 Gew.-% und |
| B | 2 bis 33 Gew.-% |
betragen.

5. Verwendung eines Flüssigtoners gemäß Anspruch 4 zur elektrophotographischen Herstellung von Flachdruckplatten.

6. Verwendung eines Flüssigtoners gemäß Anspruch 4 zur Herstellung von Ätz- oder Galvanoresists.
